(19) Europäisches Patentamt
European Patent Office
Office européen des brevets

(11) **EP 3 255 464 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
*G01V 3/12* *(2006.01)*      *G01S 13/524* *(2006.01)*
*G08B 13/183* *(2006.01)*

(21) Anmeldenummer: **16173653.3**

(22) Anmeldetag: **09.06.2016**

(54) **EMPFÄNGERSCHALTUNG FÜR EINE MIKROWELLENSCHRANKE**

RECEIVER CIRCUIT FOR A MICROWAVE BARRIER

CIRCUIT RÉCEPTEUR POUR ARMOIRE À MICRO-ONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.12.2017 Patentblatt 2017/50**

(73) Patentinhaber: **VEGA Grieshaber KG**
**77709 Wolfach (DE)**

(72) Erfinder: **FISCHER, Michael**
**72275 Alpirsbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**DE-A1-102006 056 111**     **DE-A1-102013 213 346**
**US-A1- 2004 020 314**     **US-A1- 2012 188 081**

EP 3 255 464 B1

**Beschreibung**

Gebiet der Erfindung

Die Erfindung betrifft die Klassifizierung von Objekten mithilfe einer Mikrowellenschranke. Insbesondere betrifft die Erfindung eine Empfängerschaltung für eine Mikrowellenschranke zur Detektion und Klassifikation eines Zielobjekts im Bereich der Mikrowellenschranke, eine Mikrowellenschranke mit einer Sendeschaltung und einer Empfängerschaltung, ein Verfahren zur Detektion und Klassifikation eines Zielobjekts im Bereich einer Mikrowellenschranke, ein Programmelement und ein computerlesbares Medium.

Hintergrund

Die grundlegende Funktionsweise einer Mikrowellenschranke ist beispielsweise aus der DE 33 02 731 A1 bekannt. Ein Sender sendet ein Dauerstrich-Mikrowellensignal in Richtung eines zugehörigen Empfängers aus. Wird der direkte Übertragungsweg vom Sender zum Empfänger durch ein Zielobjekt oder durch den Füllstand in einem Behälter unterbrochen, macht sich dies durch einen fehlenden oder reduzierten Empfangspegel im Empfänger bemerkbar. Der Abfall des Empfangspegels wird im Empfänger detektiert und in ein Schaltsignal umgewandelt. Mit solch einer einfachen Anordnung lässt sich jedoch beispielsweise nicht die Richtung bestimmen, aus welcher ein Objekt die Mikrowellenschranke passiert.

Um Länge, Richtung und Geschwindigkeit der die Mikrowellenschranke passierenden Objekte bestimmen zu können, können zwei getrennt arbeitende Mikrowellenschranken verwendet werden, welche nebeneinander angeordnet sind. Richtung und Geschwindigkeit erhält man aus der zeitlichen Schaltreihenfolge der beiden unabhängigen Mikrowellenschranken. Kommt das Objekt aus entgegengesetzter Richtung, kehrt sich die Schaltreihenfolge in den Empfängern um. Die mittlere Geschwindigkeit der Objekte lässt sich über den Abstand der beiden Mikrowellenschranken und über die Zeitdifferenz der Schaltsignale an den beiden Empfängern bestimmen. Die Länge des Objekts ergibt sich dann aus der berechneten Geschwindigkeit und der Zeitdauer, während der an dem einzelnen Empfänger das Schaltsignal anliegt.

Diese Lösung erfordert jedoch einen deutlich größeren Hardwareaufwand im Vergleich zu einer einzelnen Mikrowellenschranke. Zusätzlich müssen die Schaltsignale der beiden unabhängigen Empfänger zusammengeführt und in einer weiteren Elektronikeinheit ausgewertet werden.

DE 10 2006 056 111 A1 beschreibt ein Verfahren und eine Radaranordnung zur Überwachung eines Überwachungsbereichs mit einem Radarsender und einem gegenüber angeordneten Reflektor zur abwechselnden Dopplermessung und Reflexionsmessung. Das Verfahren kann hierdurch zusätzliche Informationen über die Entfernung, die Geschwindigkeit und die Winkelgeschwindigkeit eines Objektes im Überwachungsbereich liefern.

Zusammenfassung der Erfindung

Es ist eine Aufgabe der Erfindung, eine Mikrowellenschranke anzugeben, welche kostengünstig ist und gleichzeitig die Länge und die Bewegungsrichtung des Zielobjekts erfassen kann.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der Erfindung betrifft eine Empfängerschaltung für eine Mikrowellenschranke zur Detektion und Klassifikation eines Zielobjekts im Bereich der Mikrowellenschranke. Die Empfängerschaltung weist zwei Teilschaltungen auf, von denen die erste zum Erzeugen und Aussenden eines (ersten) Signals, beispielsweise eines kontinuierlichen Dauerstrichsignals (CW-Signals) oder anderweitig modulierten Signals, und zum Erfassen einer Dopplerverschiebung des am Zielobjekt reflektierten ersten Signals ausgeführt ist. Die zweite Teilschaltung ist zum Empfangen und Auswerten eines von einer entfernt angeordneten Sendeschaltung der Mikrowellenschranke ausgesendeten Messsignals ausgeführt.

Unter dem Begriff der Klassifikation des Zielobjekts ist die Bestimmung von Eigenschaften des Zielobjekts zu verstehen, welche über seine bloße Detektion hinausgehen. Beispiele für diese Eigenschaften sind Geschwindigkeit, Bewegungsrichtung, Transparenz für Mikrowellenstrahlung und Länge.

Beide Teilschaltungen können grundsätzlich so ausgeführt sein, dass sie sich bestimmte Schaltungsteile teilen. Es können aber auch komplett getrennte Teilschaltungen sein, wobei aus Kostengründen der ersten Lösung im Allgemeinen der Vorzug zu geben ist.

Die Empfängerschaltung kann neben der Signaldämpfung (oder Blockierung) des von der Sendeschaltung ausgesendeten Messsignals auch die Bewegungsrichtung, die Geschwindigkeit und (indirekt) die Länge des Zielobjekts bestimmen, welches den Signalpfad der Schranke passiert. Insbesondere kann auch bei zeitweisem Stillstand des Zielobjekts eine sichere Längenmessung durchgeführt werden, da die erste Teilschaltung aus der gemessenen Dopplerverschiebung des am Zielobjekt reflektierten ersten Signals dessen aktuelle Geschwindigkeit bestimmen kann und somit feststellen kann, ob sich das Zielobjekt zu einem bestimmten Zeitpunkt bewegt oder nicht.

Um die Dopplerverschiebung messen zu können, ist es vorteilhaft, wenn Sendeschaltung und Empfängerschaltung unter einem Winkel ungleich 90 Grad zur Bewegungsrichtung des Zielobjekts angeordnet sind. Auch kann vorgesehen sein, dass zwar die Sendeschaltung und die Empfangsschaltung unter einem Winkel von 90 Grad zur Bewegungsrichtung des Zielobjekts angeordnet sind, die Aussendung des Dauerstrichsignals zur Geschwindigkeitsmessung jedoch unter einem anderen Winkel zur Bewegungsrichtung des Zielobjekts erfolgt, beispielsweise in einem Winkel zwischen 20 Grad und 70 Grad. In diesem Fall kann vorgesehen sein, dass die Empfängerschaltung eine Empfangsantenne aufweist, die in Richtung Sendeschaltung weist und eine Sende-/Empfangsantenne für die Aussendung und den Empfang des ersten Signals, welche schräg zur Bewegungsrichtung des Zielobjekts gerichtet ist.

Aus den gemessenen Parametern Geschwindigkeit und Zeitdauer der Signaldämpfung beim Passieren der Mikrowellenschranke kann die Länge der Zielobjekte bestimmt werden. Über die Signaldämpfung kann auf die Dicke oder Größe der Zielobjekte, falls deren Transparenz für Mikrowellenstrahlung der betreffenden Frequenz bekannt ist, oder allgemein auf deren Materialbeschaffenheit geschlossen werden. Dies alles ermöglicht eine Klassifikation der die Mikrowellenschranke passierenden Zielobjekte nach Geschwindigkeit, Länge, Dicke/Größe oder auch Materialbeschaffenheit.

Ein Anwendungsfall hierzu ist die Klassifikation von verschiedenartigen Zielobjekten auf einem Förderband, welches natürlich auch über einen längeren Zeitraum stillstehen kann. Ein weiterer Anwendungsfall ist die Erfassung von Schienenfahrzeugen, Wasserfahrzeugen oder Landfahrzeugen.

Die Empfängerschaltung weist einen nicht signifikant erhöhten Schaltungs- oder Hardwareaufwand und auch keinen deutlich erhöhten Energiebedarf im Vergleich zu bekannten Mikrowellenschaltungen auf.

Ein weiterer Aspekt der Erfindung betrifft ein Verfahren zur Detektion und Klassifikation eines Zielobjekts im Bereich einer Mikrowellenschranke, bei dem zunächst ein Messsignal durch eine Sendeschaltung erzeugt und ausgesendet wird. Dieses Messsignal wird von einer gegenüber angeordneten Empfangsschaltung empfangen und ausgewertet. Weiterhin wird ein anderes Signal, beispielsweise ein CW-Signal, durch die Empfangsschaltung erzeugt und in Richtung des Zielobjekts ausgesendet. Dieses Signal wird vom Zielobjekt reflektiert und das reflektierte Signal, das eine Frequenzverschiebung im Vergleich zum ursprünglich ausgesendeten Signal (sog. Dopplerverschiebung) aufweist, wird von der Empfangsschaltung erfasst und auf die Dopplerverschiebung hin untersucht, um daraus die Geschwindigkeit und Bewegungsrichtung des Zielobjekts zu bestimmen.

Ein weiterer Aspekt der Erfindung betrifft ein Programmelement, das, wenn es auf einem Prozessor einer oben und im Folgenden beschriebenen Mikrowellenschranke ausgeführt wird, die Mikrowellenschranke anleitet, die oben und im Folgenden beschriebenen Verfahrensschritte durchzuführen.

Ein vierter Aspekt der Erfindung betrifft ein computerlesbares Medium, auf dem das oben beschriebene Programmelement gespeichert ist.

Weiterhin betrifft die Erfindung eine Mikrowellenschranke zur Detektion eines Zielobjekts im Bereich der Mikrowellenschranke, welche die oben und im Folgenden beschriebene Empfängerschaltung sowie eine entsprechende, der Empfängerschaltung gegenüberliegend anzuordnende Sendeschaltung aufweist.

Es sei darauf hingewiesen, dass die hier und im Folgenden im Hinblick auf die Empfängerschaltung beschriebenen Merkmale auch Teil der kompletten Mikrowellenschranke sind und teilweise auch als Verfahrensschritte in das Verfahren implementiert werden können.

Gemäß einer Ausführungsform der Erfindung weist die Empfängerschaltung eine Steuereinheit, die im Folgenden auch als Prozessor bezeichnet wird, auf, welche dem Auswerten des empfangenen Messsignals dient. Darüber hinaus ist die Steuereinheit zum Triggern der Erfassung der Dopplerverschiebung oder sogar der Erzeugung und Aussendung des ersten Signals ausgeführt, und zwar genau dann, wenn der Pegel des empfangenen Messsignals unter einen voreingestellten Schwellwert fällt. Der Umstand, dass der Pegel des empfangenen Messsignals unter den voreingestellten Schwellwert fällt, soll damit korrespondieren, dass sich das Zielobjekt im Signalweg zwischen der Sendeschaltung und der Empfangsschaltung befindet und somit das von der Sendeschaltung in Richtung Empfangsschaltung ausgesendete Messsignal blockiert. In diesem Fall wird also das Zielobjekt detektiert.

Gemäß einer weiteren Ausführungsform der Erfindung ist die Steuereinheit ausgeführt, die Erzeugung und Aussendung des ersten Signals zu stoppen, wenn der Pegel des empfangenen Messsignals über den voreingestellten Schwellwert ansteigt, wenn also in anderen Worten das Zielobjekt den Signalpfad nicht mehr blockiert.

Gemäß einer weiteren Ausführungsform der Erfindung weist die Empfängerschaltung einen einzigen Mikrowellenoszillator auf, der dem Erzeugen des ersten Signals und eines LO-Signals dient, welches zum Transformieren der empfangenen Signale (Messsignal und am Zielobjekt reflektiertes erstes Signal) in Zwischenfrequenzsignale dient. Das erste Signal wird in diesem Fall vorzugsweise dauerhaft ausgesendet, unabhängig davon, ob sich ein Zielobjekt im Signalweg befindet oder nicht.

Gemäß einer weiteren Ausführungsform der Erfindung ist die Empfängerschaltung zum Detektieren des Zielobjekts, seiner Geschwindigkeit, seiner Länge und seiner Bewegungsrichtung ausgeführt. Zum Detektieren des Zielobjekts wird das Messsignal, das von der gegenüberliegenden Sendeschaltung ausgesendet wurde, verwendet und zur Bestimmung seiner Geschwindigkeit und seiner Bewegungsrichtung das am Zielobjekt reflektierte erste Signal. Zur Bestimmung der Länge des Zielobjekts können beide Signale herangezogen werden, wobei sich aus dem Messsignal erkennen lässt, wie lange sich das Objekt im Signalpfad befunden hat, und sich aus dem reflektierten ersten Signal erkennen lässt, welche Geschwindigkeit es zu jedem Zeitpunkt hatte. Grundsätzlich kann die Längenbestimmung aber auch mit dem ersten Signal alleine durchgeführt werden.

Im Folgenden werden mit Verweis auf die Figuren Ausführungsbeispiele der Erfindung beschrieben.

Kurze Beschreibung der Figuren

Fig. 1 zeigt eine Mikrowellenschranke gemäß einem Ausführungsbeispiel der Erfindung.

Fig. 2a zeigt die Geschwindigkeit eines Zielobjekts in Abhängigkeit von der Zeit.

Fig. 2b zeigt den Signalpegel in der Empfängerschaltung in Abhängigkeit von der Zeit.

Fig. 2c zeigt ein von der Empfängerschaltung erzeugtes Schaltsignal in Abhängigkeit von der Zeit.

Fig. 3 zeigt eine Empfängerschaltung gemäß einem Ausführungsbeispiel der Erfindung.

Fig. 4 zeigt ein Schaltungsteil, welches anstatt des Mischers in der Empfängerschaltung der Fig. 3 verwendet werden kann.

Fig. 5 zeigt ein weiteres Schaltungsteil welches anstatt des Mischers in der Empfängerschaltung der Fig. 3 verwendet werden kann.

Fig. 6 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

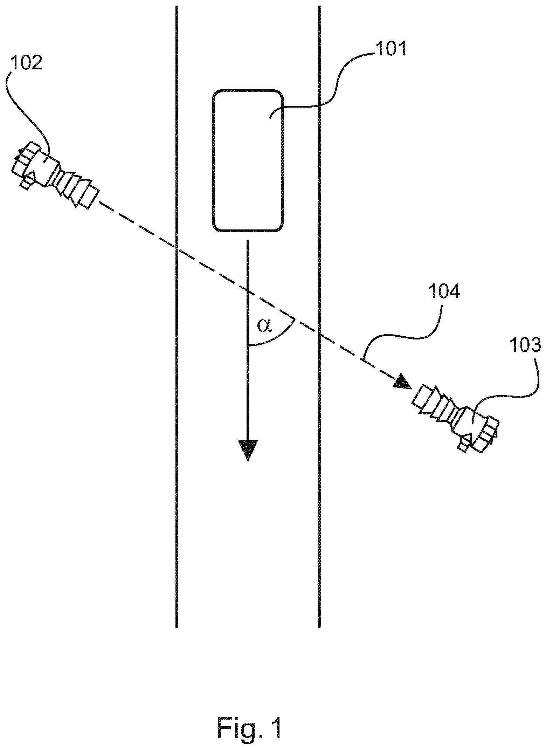

Fig. 1 zeigt eine Mikrowellenschranke gemäß einem Ausführungsbeispiel der Erfindung. Die Geschwindigkeitsmessung erfolgt durch Auswertung der Frequenzverschiebung durch den Doppler-Effekt unter Einbeziehung des Schaltsignals am Empfänger (Empfangsschaltung) der Mikrowellenschranke. Hierzu wird vom Empfänger der Mikrowellenschranke beispielsweise ein Dauerstrichsignal (CW-Signal, CW = continuous wave) über die Antenne in Richtung des Zielobjektes abgestrahlt. Das am Zielobjekt reflektierte Mikrowellensignal erfährt durch dessen Bewegung mit der Geschwindigkeit $v$ eine Dopplerverschiebung um die Dopplerfrequenz $f_d$. Die Dopplerfrequenz $f_d$ berechnet sich wie folgt:

$$f_d = \frac{2v}{\lambda} \cos(\alpha)$$

Hierbei stellt $\lambda$ die Wellenlänge des in Richtung des Zielobjektes abgestrahlten CW-Signals dar. Der Winkel $\alpha$ zwischen dem Geschwindigkeitsvektor des zu vermessenden Objekts (Zielobjekt) und der Richtung des vom Empfänger abgestrahlten CW-Signals (Hauptstrahlrichtung der Antenne des Empfängers) muss mit in die Rechnung einbezogen werden, da bekanntlich nur der radiale Geschwindigkeitsvektor des Zielobjektes in Bezug auf die Ausrichtung der Empfängerantenne mit Hilfe der Dopplerauswertung bestimmt werden kann. Fig. 1 verdeutlicht diese Zusammenhänge.

Hier bewegt sich ein Objekt 101 beispielsweise auf einem Förderband in Pfeilrichtung durch die Mikrowellenschranke, bestehend aus der Sendeschaltung 102, der Empfängerschaltung 103 und der Übertragungsstrecke 104 dazwischen. Sender 102 und Empfänger 103 sollten bezüglich Polarisation und Hauptstrahlrichtung ihrer Antennen ideal aufeinander ausgerichtet sein.

Der Empfänger 103 misst zusätzlich zum Messsignal des Senders 102 die Geschwindigkeit des Objektes 101 beim Passieren der Schranke durch Dopplerauswertung eines vom Empfänger 103 abgestrahlten CW-Signals, welches am Objekt 101 reflektiert wird und wieder in den Empfänger 103 gelangt. Der Winkel $\alpha$ sollte in der Praxis Werte zwischen 20° und 70° annehmen. Erreicht der Winkel $\alpha$ einen Wert von 90°, d.h. steht der Geschwindigkeitsvektor des Zielobjektes senkrecht zur Ausrichtung der Übertragungsstrecke der Mikrowellenschranke, wird die Radialgeschwindigkeit des Objektes 101 und damit auch die Dopplerfrequenz null.

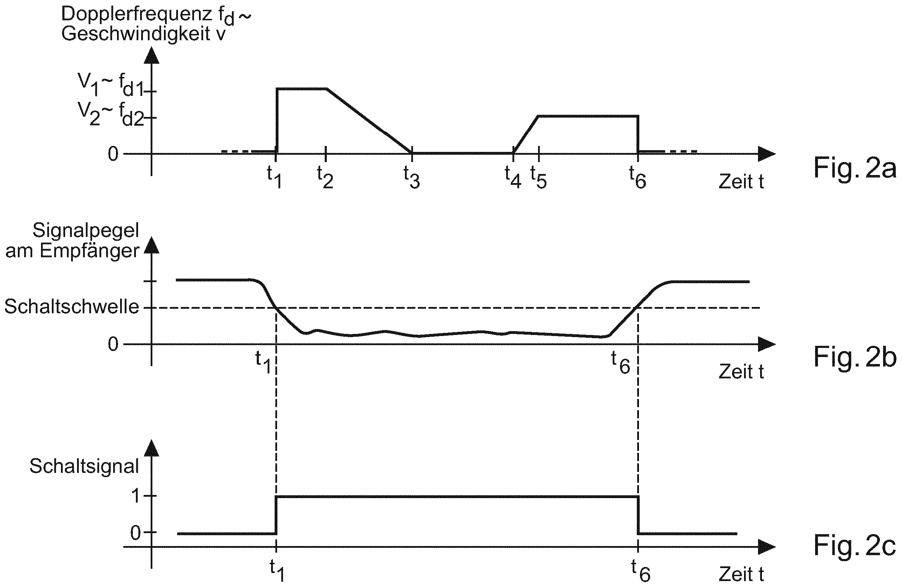

In Fig. 2a ist exemplarisch ein möglicher Verlauf der Geschwindigkeit $v$ und proportional dazu auch der Dopplerfrequenz $f_d$ im Empfänger dargestellt ($f_d \sim v$), den ein Objekt beim Passieren der Mikrowellenschranke erzeugt. Beim Eintritt des Objektes in den Erfassungsbereich der Mikrowellenschranke fällt der Signalpegel des vom Sender ausgesendeten Messsignals zum Zeitpunkt $t_1$ am Empfänger unter eine einstellbare Schaltschwelle (Fig. 2b). Am Empfänger wird dann ein Schaltsignal ausgelöst (Fig. 2c). Eine freie Übertragungsstrecke der Mikrowellenschranke erzeugt hierbei im Empfänger beispielsweise ein Schaltsignal "0". Wird die Übertragungsstrecke unterbrochen, registriert der Empfänger ein abgeschwächtes Empfangssignal unter der Schaltschwelle und ändert das Schaltsignal auf "1".

Zu Beginn wird am Empfänger eine Dopplerfrequenz $f_{d1}$ ermittelt. Das Objekt bewegt sich bis zum Zeitpunkt $t_2$ mit konstanter Geschwindigkeit $v_1$, wird dann bis $t_3$ zum Stillstand abgebremst und verharrt bis $t_4$ ohne Bewegung im Erfassungsbereich der Mikrowellenschranke. Im Zeitraum zwischen $t_3$ und $t_4$ verschwindet folglich das Dopplersignal im Empfänger. Dies wäre jedoch auch der Fall, wenn sich kein Objekt im Erfassungsbereich der Mikrowellenschranke befindet, die Übertragungsstrecke zwischen Sender und Empfänger also frei wäre, wie beispielsweise in den Zeiträumen vor $t_1$ und nach $t_6$. Der Signalpegel und das Schaltsignal im Empfänger zeigen jedoch im Zeitraum zwischen $t_3$ und $t_4$ immer noch eine unterbrochene Übertragungsstrecke an (Schaltsignal "1"), so dass aus diesen beiden Informationen auf ein stillstehendes Objekt geschlossen werden kann.

Ab Zeitpunkt $t_4$ erfolgt eine Beschleunigung des Objektes, die dann ab $t_5$ in eine konstante Geschwindigkeit $v_2$ übergeht, die der Dopplerfrequenz $f_{d2}$ entspricht. Zum Zeitpunkt $t_6$ verlässt das Objekt schließlich den Erfassungsbereich der Mikrowellenschranke, der Signalpegel im Empfänger steigt wieder über die Schaltschwelle und das Schaltsignal fällt zurück auf "0". Über den im Empfänger aufgenommenen Verlauf der Geschwindigkeit v bzw. der Dopplerfrequenz $f_d$ über der Zeit, wie in Fig. 2a dargestellt, lässt sich auf die Länge l des Objektes schließen, indem die Fläche unter der Kurve z.B. durch Integration ermittelt wird.

$$l = \int_{t1}^{t6} v \, dt = \frac{\lambda}{2 \cos(\alpha)} \int_{t1}^{t6} f_d \, dt$$

Die Grenzen $t_1$ und $t_6$ stellen hier die Eintrittszeit des Objektes in den Erfassungsbereich der Mikrowellenschranke bzw. die Austrittszeit bei Verlassen des Erfassungsbereiches dar.

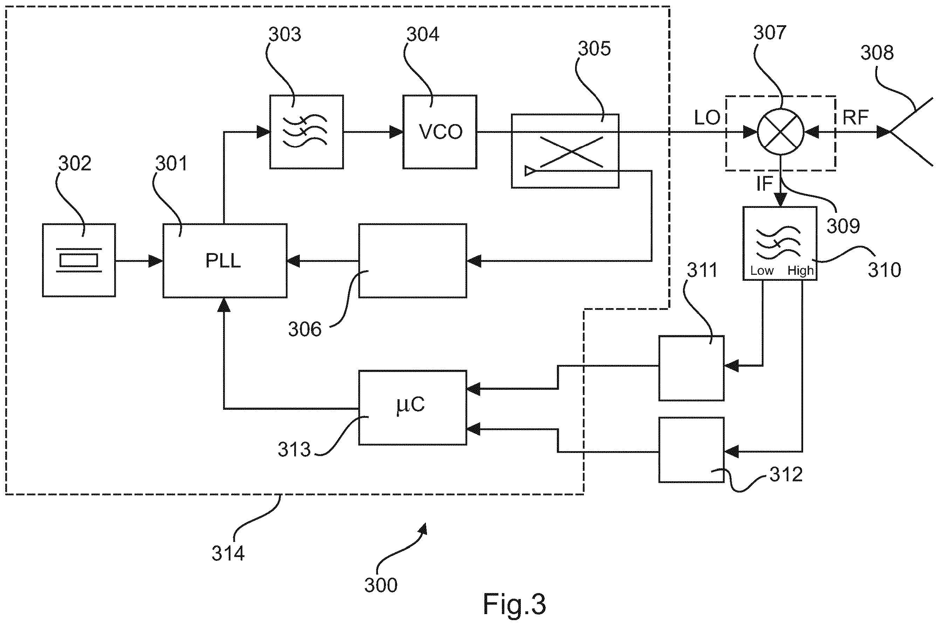

Fig. 3 zeigt das Blockschaltbild einer Empfängerschaltung 300 mit welcher das vom Sender der Mikrowellenschranke gesendete Messsignal empfangen und ausgewertet werden kann. Weiterhin ist es mit dieser Schaltung möglich, gleichzeitig ein CW-Signal über die Antenne 308 zu senden und die durch den Dopplereffekt verursachte Frequenzverschiebung des am Zielobjekt reflektierten Signals wieder zu empfangen und auszuwerten. Somit ist die Geschwindigkeitsbestimmung des Zielobjektes möglich.

Vorzugsweise wird die Sendefrequenz des CW-Signals für die Dopplerauswertung so gewählt, dass sie identisch ist mit der LO-Frequenz (LO = Lokaloszillator) für den Mischer 307 im Empfänger. Mit dem LO-Signal für den Mischer in der Empfängerschaltung wird zudem das vom Sender der Mikrowellenschranke gesendete Signal in einen Zwischenfrequenzbereich heruntergemischt. Mit diesem Ansatz vereinfacht sich der Schaltungsaufwand im Empfänger beträchtlich und es reicht ein einziger Mikrowellenoszillator 304 aus, dessen Ausgangssignal einmal als LO-Signal für den Mischer, als auch das CW-Sendesignal für die Dopplerauswertung verwendet wird.

Ein spannungsgesteuerter Mikrowellenoszillator 304 (VCO = voltage controlled oscillator) wird hierzu beispielsweise in einer Phasenregelschleife betrieben. Die Phasenregelschleife besteht aus den Komponenten VCO 304, PLL-Baustein 301, Referenzoszillator 302, Schleifenfilter 303 und den weiteren optionalen Komponenten Koppler 305 und Vorteiler 306. Die Funktionsweise der Phasenregelschleife kann der Literatur entnommen werden und ist dem Fachmann bekannt.

Die Programmierung des PLL-Bausteins 301 und damit auch die Frequenzeinstellung des LO-Signals, welches über den Koppler 305 dem Mischer 307 zugeführt wird, erfolgt vorzugsweise durch einen Mikrocontroller 313 oder einen anderen Prozessor.

Die Teilschaltung 314 in Fig. 3 lässt sich auch als Oszillatorschaltung im Sender 102 der Mikrowellenschaltung einsetzen. Sie eignet sich zur exakten und stabilen Einstellung der Frequenz des Sendesignals.

Durch die nur endliche Isolation des Mischers 307 gelangt auch ein Teil des LO-Signals an die Antenne 308 und wird abgestrahlt. Das am Zielobjekt reflektierte und mit der Dopplerverschiebung behaftete Signal gelangt wiederum zur Antenne 308 und wird im Mischer mit dem LO-Signal umgesetzt, so dass am IF-Ausgang 309 des Mischers das Dopplerspektrum ohne Träger übrig bleibt. Gleichzeitig wird im Mischer 307 das Messsignal des Senders der Mikrowellenschranke in eine Zwischenfrequenz umgesetzt. Vorzugsweise werden die Frequenzen des Sendesignals des Mikrowellensenders 102 und des LO-Signals im Empfänger so gewählt, dass das im Mischer 307 umgesetzte Zwischenfrequenzsignal nicht in das zu erwartende Dopplerfrequenzspektrum fällt.

Dies ist in der Praxis leicht umsetzbar, da bei üblichen Radarfrequenzen und Geschwindigkeiten von einigen Metern pro Sekunde lediglich Dopplerfrequenzen von einigen wenigen Kilohertz auftreten können. Das Signal des Senders der Mikrowellenschranke würde man im Mischer 307 folglich in einen höheren Frequenzbereich, z.B. in den Megahertz-Bereich umsetzen. So kann sichergestellt werden, dass beide Signale nach dem heruntermischen im Empfangsmischer 307 einen ausreichenden Frequenzabstand besitzen, um sie mit geringem Aufwand im Zwischenfrequenzpfad nach dem Mischer wieder trennen zu können.

Die beiden am ZF-Ausgang 309 des Mischers 307 vorliegenden Signale werden beispielsweise mit Hilfe eines Diplexers 310 getrennt, um sie in verschiedenen Zwischenfrequenzpfaden weiterverarbeiten zu können.

Das Dopplersignal passiert weiterhin den Verarbeitungsblock 311 und wird hier verstärkt und in einem Analog-Digital-Wandler abgetastet. Im Prozessor 313 erfolgt dann die Berechnung des Dopplerspektrums, welches man durch Transformation des abgetasteten Dopplersignals in den Frequenzbereich erhält. Aus dem Dopplerspektrum lässt sich dann die Dopplerfrequenz und folglich die Geschwindigkeitsinformation des Zielobjektes über der Zeit entnehmen.

Das vom Sender der Mikrowellenschranke stammende, heruntergemischte Zwischenfrequenzsignal wird im Verarbeitungsblock 312 verstärkt und gefiltert und anschließend mit Hilfe eines Analog-Digital-Wandlers digitalisiert. Die Auswertung des Empfangspegels erfolgt schließlich ebenfalls im Prozessor 313. Anstatt eines Analog-Digital-Wandlers kann hier beispielsweise auch ein logarithmischer Verstärker eingesetzt werden.

Im Prozessor 313 werden dann die zeitlichen Verläufe von Dopplerfrequenz, Empfangspegel und Schaltsignal, wie in den Figuren 2a bis 2c dargestellt, bereitgestellt und ausgewertet. So können dann beispielsweise die Länge des Objektes und die mittlere Geschwindigkeit und auch über die Signaldämpfung die Dicke oder die Materialbeschaffenheit bestimmt werden. Mit diesen Parametern lässt sich dann eine Klassifikation der die Mikrowellenschranke passierenden Objekte durchführen.

Es kann als ein Kernaspekt der Erfindung angesehen werden, dass die Empfängerschaltung zur Geschwindigkeits- und Längenmessung von Objekten einsetzbar ist, die sich durch den Erfassungsbereich der Mikrowellenschranke bewegen. Über die zusätzlich gewonnenen Parameter wie Geschwindigkeit, Länge und Signaldämpfung lässt sich eine Klassifikation der die Mikrowellenschranke passierenden Objekte durchführen.

Bei der Ausführung der Empfängerschaltung in Fig. 3 wird die nur endliche Isolation des Mischers 307 zwischen LO- und RF-Anschluss ausgenutzt, um ein Sendesignal für die Dopplerauswertung zu erzeugen. Die Isolation des Mischers ist allerdings oft nicht exakt definiert und kann insbesondere über verschiedene Fertigungschargen des Mischers 307 stark schwanken. Dies hat zur Folge, dass die Sendeleistungen des Signals zur Dopplerauswertung über mehrere Geräte ebenfalls starken Schwankungen unterworfen ist.

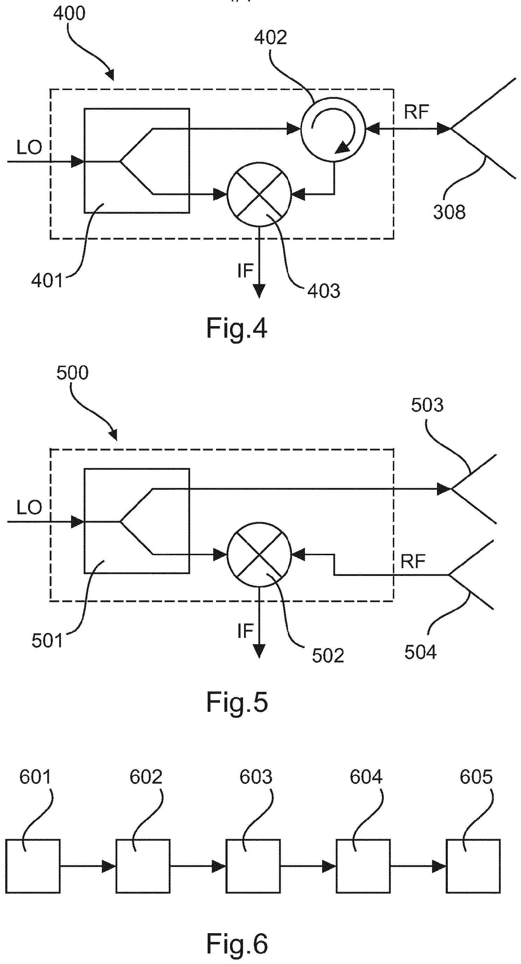

Um einen definierten Signalpegel zur Dopplerauswertung bereitstellen zu können, verwendet man vorzugsweise den Schaltungsteil 400 in Fig. 4, welcher anstatt des Mischers 307 in die Schaltung in Fig. 3 eingesetzt wird. Hier wird das Signal am LO-Eingang zunächst im Signalteiler 401 in einen Anteil für den Mischer 403 und einen Sendeanteil aufgeteilt. Der Sendeanteil gelangt über einen Zirkulator 402 an die Antenne 308 und wird abgestrahlt. Das mit dem Doppleranteil behaftete Empfangssignal gelangt wiederum über die Antenne 308 zum Zirkulator 402 und wird von dort an den Mischer 403 weitergeleitet, wo der ursprüngliche Träger entfernt wird und das Dopplersignal übrig bleibt und weiterverarbeitet werden kann. Anstelle des Zirkulators 402 können in dieser Schaltungsvariante beispielsweise auch ein Koppler oder wiederum ein Signalteiler zum Einsatz kommen.

Eine weitere Schaltungsvariante 500 ist in Fig. 5 dargestellt, welche anstelle des Mischers 307 in der Schaltung 300 eingesetzt werden kann. Hier wird ebenfalls das Signal am LO-Eingang zunächst in einen Anteil für den Mischer 502 und einen Sendeanteil aufgeteilt. Ein zusätzlicher Zirkulator/Signalteiler/Koppler kann hier jedoch entfallen, da getrennte Sende- 503 und Empfangsantennen 504 verwendet werden. Mit Hilfe dieser Schaltungsvariante wird ebenfalls ein definierter Sendepegel zur Dopplerauswertung bereitgestellt und über die Sendeantenne 503 abgesendet.

Soll bei der Dopplerauswertung zusätzlich zur Geschwindigkeit auch noch die Richtung bestimmt werden, aus welcher ein Objekt die Mikrowellenschranke durchquert, wird vorzugsweise ein IQ-Mischer (I : In-Phase, Q: Quadrature) anstelle des Mischers 403 in der Schaltung 400 oder anstelle des Mischers 502 in Schaltung 500 eingesetzt. Dieser Mischertyp besteht im Wesentlichen aus zwei einzelnen Mischern, deren LO-Signale um 90° gegeneinander phasenverschoben sind. Über die Phasenbeziehung der beiden heruntergemischten IF-Signale I und Q, kann die Richtung bestimmt werden, d.h. es kann abgeleitet werden, ob sich das Objekt im Erfassungsbereich der Mikrowellenschranke auf den Empfänger zubewegt oder sich von ihm entfernt. Bedingt durch die zwei heruntergemischten Signalkomponenten I und Q, müssen bei dem Einsatz eines solchen Mischers die nachfolgenden Signalpfade doppelt ausgeführt werden. In der Schaltung 300 in Fig. 3 müssten dann die Blöcke 310, 311 und 312 doppelt ausgeführt werden, einmal für die Signalkomponente I und einmal für die Komponente Q.

Fig. 6 zeigt ein Flussdiagramm eines Verfahrens gemäß einem Ausführungsbeispiel der Erfindung. In Schritt 601 wird ein Messsignal durch eine Sendeschaltung erzeugt und in Richtung einer Empfangsschaltung ausgesendet. In Schritt 602 wird das von der Sendeschaltung ausgesendete Messsignal durch die Empfangsschaltung empfangen. in Schritt 603 erfolgt ein Erzeugen und Aussenden eines CW-Signals durch die Empfangsschaltung, wobei das Erzeugen und Aussenden des CW-Signals nur dann erfolgt, wenn der Pegel des empfangenen Messsignals unter einen voreingestellten Schwellwert gefallen ist. Das vom Zielobjekt reflektierte CW-Signal wird von der Empfangsschaltung erfasst und daraus die Dopplerverschiebung des am Zielobjekt reflektierten CW-Signals bestimmt (Schritt 604). In Schritt 605 wird das Erzeugen und Aussenden des CW-Signals gestoppt, da der Pegel des empfangenen Messsignals über den voreingestellten Schwellwert angestiegen ist.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Empfängerschaltung (103, 300) für eine Mikrowellenschranke (102, 103) zur Detektion und Erfassung von Eigenschaften eines Zielobjekts (101) im Bereich der Mikrowellenschranke, bei denen es sich um dessen Geschwindigkeit und Länge handelt, aufweisend:

eine erste Teilschaltung (314, 311, 307, 308, 310) zum Erzeugen und Aussenden eines ersten Signals und zum Erfassen einer Dopplerverschiebung des am Zielobjekt reflektierten ersten Signals;
eine zweite Teilschaltung (312, 307, 308, 310) zum Empfangen und Auswerten eines von einer gegenüber der Empfängerschaltung angeordneten Sendeschaltung (102) der Mikrowellenschranke ausgesendeten Messsignals;
wobei die Länge des Zielobjekts aus der Dopplerverschiebung und der Zeitdauer zum Passieren der Mikrowellenschranke bestimmt wird.

2. Empfängerschaltung nach Anspruch 1, weiter aufweisend:
eine Steuereinheit (313) zum Auswerten des empfangenen Messsignals und zum Triggern der Erfassung der Dopplerverschiebung, wenn der Pegel des empfangenen Messsignals unter einen voreingestellten Schwellwert fällt.

3. Empfängerschaltung nach Anspruch 2,
wobei die Steuereinheit (313) ausgeführt ist, die Erfassung der Dopplerverschiebung zu stoppen, wenn der Pegel des empfangenen Messsignals über den voreingestellten Schwellwert ansteigt.

4. Empfängerschaltung nach einem der vorhergehenden Ansprüche,
wobei das erste Signal dauerhaft ausgesendet wird, unabhängig davon, ob sich ein Zielobjekt im Signalweg befindet oder nicht.

5. Empfängerschaltung nach einem der vorhergehenden Ansprüche,
aufweisend einen einzigen Mikrowellenoszillator (304) zum Erzeugen des ersten Signals sowie eines LO-Signals zum Transformieren der empfangenen Signale in Zwischenfrequenzsignale.

6. Empfängerschaltung nach einem der vorhergehenden Ansprüche, ausgeführt zum Detektieren des Zielobjekts (101), seiner Geschwindigkeit, seiner Länge und seiner Bewegungsrichtung.

7. Mikrowellenschranke (102, 103) zur Detektion eines Zielobjekts (101) im Bereich der Mikrowellenschranke, aufweisend:

eine Sendeschaltung (102) zum Aussenden eines Messsignals;
eine Empfängerschaltung (103, 300) nach einem der vorhergehenden Ansprüche.

8. Verfahren zur Detektion und Klassifikation eines Zielobjekts (101) im Bereich einer Mikrowellenschranke, aufweisend die Schritte:

Erzeugen und Aussenden eines Messsignals durch eine gegenüber einer Empfangsschaltung (103) angeordneten Sendeschaltung (102);
Empfangen und Auswerten des von der Sendeschaltung ausgesendeten Messsignals durch die Empfangsschaltung (103);
Erzeugen und Aussenden eines weiteren Signals durch die Empfangsschaltung;
Erfassen einer Dopplerverschiebung des am Zielobjekt reflektierten weiteren Signals durch die Empfangsschaltung;
Bestimmen der Länge des Zielobjekts aus der Dopplerverschiebung und der Zeitdauer zum Passieren der Mikrowellenschranke.

9. Verfahren nach Anspruch 8, wobei das Erfassen der Dopplerverschiebung nur dann erfolgt, wenn der Pegel des empfangenen Messsignals unter einen voreingestellten Schwellwert gefallen ist.

10. Verfahren nach Anspruch 8 oder 9, wobei das Erfassen der Dopplerverschiebung gestoppt wird, wenn der Pegel des empfangenen Messsignals über den voreingestellten Schwellwert angestiegen ist.

11. Programmelement, das, wenn es auf einem Prozessor (313) einer Mikrowellenschranke ausgeführt wird, die Mikrowellenschranke anleitet, die folgenden Schritte durchzuführen:

Erzeugen und Aussenden eines Messsignals durch eine gegenüber einer Empfangsschaltung (103) angeordneten Sendeschaltung (102);
Empfangen und Auswerten des von der Sendeschaltung ausgesendeten Messsignals durch die Empfangsschaltung (103);
Erzeugen und Aussenden eines weiteren Signals durch die Empfangsschaltung;
Erfassen einer Dopplerverschiebung des am Zielobjekt reflektierten weiteren Signals durch die Empfangsschaltung;
Bestimmen der Länge des Zielobjekts aus der Dopplerverschiebung und der Zeitdauer zum Passieren der Mikrowellenschranke.

12. Computerlesbares Medium, auf dem ein Programmelement nach Anspruch 11 gespeichert ist.

Claims

1. Receiver circuit (103, 300) for a microwave barrier (102, 103) for detecting and acquiring characteristics of a target object (101) in the region of the microwave barrier, which are a speed and a length thereof, comprising:

> a first sub-circuit (314, 311, 307, 308, 310) for generating and transmitting a first signal and for detecting a Doppler shift of the first signal reflected at the target object;
> a second sub-circuit (312, 307, 308, 310) for receiving and evaluating a measuring signal transmitted by a transmitting circuit (102) of the microwave barrier arranged opposite the receiver circuit;
> where the length of the target object is determined from the Doppler shift and the time duration for passing the microwave barrier.

2. Receiver circuit according to claim 1, further comprising:
a control unit (313) for evaluating the received measuring signal and for triggering the detection of the Doppler shift, when the level of the received measuring signal falls below a preset threshold value.

3. Receiver circuit according to claim 2,
wherein the control unit (313) is adapted to stop the detection of the Doppler shift, when the level of the received measuring signal rises above the preset threshold value.

4. Receiver circuit according to any one of the preceding claims,
where the first signal is transmitted continuously, regardless of whether a target object is in the signal path or not.

5. Receiver circuit according to any one of the preceding claims,
comprising a single microwave oscillator (304) for generating the first signal and an LO signal for transforming the received signals into intermediate frequency signals.

6. Receiver circuit according to any one of the preceding claims, adapted to detect the target object (101), the speed thereof, the length thereof and its direction of movement.

7. Microwave barrier (102, 103) for detecting a target object (101) in the region of the microwave barrier, comprising:

> a transmitting circuit (102) for transmitting a measuring signal;
> a receiver circuit (103, 300) according to any one of the preceding claims.

8. Method for detecting and classifying a target object (101) in the region of a microwave barrier, comprising the steps of:

> generating and transmitting a measuring signal by means of a transmitting circuit (102) arranged opposite a receiving circuit (103);
> receiving and evaluating the measuring signal transmitted by the transmitting circuit by means of the receiver circuit (103);
> generating and transmitting a further signal by means of the receiving circuit;
> detecting a Doppler shift of the further signal reflected at the target object by the receiver circuit;
> determining the length of the target object from the Doppler shift and the time duration for passing the microwave barrier.

9. Method according to claim 8, wherein the detection of the Doppler shift takes place only when the level of the received measuring signal has fallen below a preset threshold value.

10. Method according to claim 8 or 9, wherein the detection of the Doppler shift is stopped, when the level of the received measuring signal has risen above the preset threshold value.

11. Program element which, when executed on a processor (313) of a microwave barrier, instructs the microwave barrier to carry out the following steps:

> generating and transmitting a measuring signal by means of a transmitting circuit (102) arranged opposite a receiving circuit (103);
> receiving and evaluating the measuring signal transmitted by the transmitting circuit by means of the receiver circuit (103);
> generating and transmitting a further signal by means of the receiving circuit;
> detecting a Doppler shift of the further signal reflected at the target object by the receiver circuit;
> determining the length of the target object from the Doppler shift and the time duration for passing the microwave barrier.

12. Computer-readable medium, on which a program element is stored according to claim 11.

**Revendications**

1. Circuit récepteur (103, 300) pour une barrière à micro-ondes (102, 103) servant à détecter et acquérir les caractéristiques d'un objet cible (101) dans la zone de la barrière à micro-ondes, lesquelles sont sa vitesse et sa longueur, présentant :

un premier sous-circuit (314, 311, 307, 308, 310) pour générer et émettre un premier signal et pour acquérir un décalage Doppler du premier signal réfléchi sur l'objet cible ;

un deuxième sous-circuit (312, 307, 308, 310) pour recevoir et évaluer un signal de mesure émis par un circuit émetteur (102) de la barrière à micro-ondes disposé en face du circuit récepteur ;

dans lequel la longueur de l'objet cible est déterminée à partir du décalage Doppler et de la durée de passage de la barrière à micro-ondes.

2. Circuit récepteur selon la revendication 1, présentant en outre :

une unité de commande (313) pour évaluer le signal de mesure reçu et pour déclencher l'acquisition du décalage Doppler lorsque le niveau du signal de mesure reçu tombe en dessous d'une valeur seuil préréglée.

3. Circuit récepteur selon la revendication 2, dans lequel l'unité de commande (313) est conçue pour arrêter l'acquisition du décalage Doppler lorsque le niveau du signal de mesure reçu passe au-dessus de la valeur seuil préréglée.

4. Circuit récepteur selon l'une des revendications précédentes, dans lequel le premier signal est émis en continu, qu'un objet cible se trouve ou non sur le trajet du signal.

5. Circuit récepteur selon l'une des revendications précédentes, présentant un oscillateur micro-ondes unique (304) pour générer le premier signal ainsi qu'un signal LO pour transformer les signaux reçus en signaux de fréquence intermédiaire.

6. Circuit récepteur selon l'une des revendications précédentes, conçu pour détecter l'objet cible (101), sa vitesse, sa longueur et sa direction de déplacement.

7. Barrière à micro-ondes (102, 103) servant à détecter un objet cible (101) dans la zone de la barrière à micro-ondes, présentant :

un circuit émetteur (102) pour émettre un signal de mesure ;
un circuit récepteur (103, 300) selon l'une des revendications précédentes.

8. Procédé pour détecter et classer un objet cible (101) dans la zone d'une barrière à micro-ondes, comprenant les étapes suivantes :

génération et émission d'un signal de mesure par un circuit émetteur (102) disposé en face d'un circuit récepteur (103) ;

réception et évaluation du signal de mesure émis par le circuit émetteur par le circuit récepteur (103) ;
génération et émission d'un signal supplémentaire par le circuit récepteur ;
acquisition d'un décalage Doppler du signal supplémentaire réfléchi sur l'objet cible par le circuit récepteur ;
détermination de la longueur de l'objet cible à partir du décalage Doppler et de la durée de passage de la barrière à micro-ondes.

9. Procédé selon la revendication 8, dans lequel l'acquisition du décalage Doppler n'a lieu que lorsque le niveau du signal de mesure reçu est tombé en dessous d'une valeur seuil préréglée.

10. Procédé selon la revendication 8 ou 9, dans lequel l'acquisition du décalage Doppler est arrêtée lorsque le niveau du signal de mesure reçu est passé au-dessus de la valeur seuil préréglée.

11. Élément de programme qui, lorsqu'il est exécuté sur un processeur (313) d'une barrière à micro-ondes, amène la barrière à micro-ondes à effectuer les étapes suivantes :

génération et émission d'un signal de mesure par un circuit émetteur (102) disposé en face d'un circuit récepteur (103) ;
réception et évaluation du signal de mesure émis par le circuit émetteur par le circuit récepteur (103) ;
génération et émission d'un signal supplémentaire par le circuit récepteur ;
acquisition d'un décalage Doppler du signal supplémentaire réfléchi sur l'objet cible par le circuit récepteur ;
détermination de la longueur de l'objet cible à partir du décalage Doppler et de la durée de passage de la barrière à micro-ondes.

12. Support lisible par ordinateur sur lequel est stocké un élément de programme selon la revendication 11.

Fig. 1

Fig. 2a

Dopplerfrequenz $f_d \sim$
Geschwindigkeit v

$V_1 \sim f_{d1}$
$V_2 \sim f_{d2}$

0

$t_1$  $t_2$  $t_3$  $t_4$ $t_5$  $t_6$

Zeit t

Fig. 2b

Signalpegel
am Empfänger

Schaltschwelle

0

$t_1$  $t_6$

Zeit t

Fig. 2c

Schaltsignal

1

0

$t_1$  $t_6$

Zeit t

EP 3 255 464 B1

Fig.3

EP 3 255 464 B1

400

402

LO

RF

308

401

IF

403

Fig.4

500

503

LO

RF

501

IF

502

504

Fig.5

601  602  603  604  605

Fig.6

13

**EP 3 255 464 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3302731 A1

- DE 102006056111 A1